# EUROPEAN PATENT APPLICATION

(11) **EP 2 372 538 A1**
(43) Date of publication of application: **05.10.2011**
(21) Application number: 10305287.4
(22) Date of filing: 23.03.2010
(51) Int. Cl.: G06F 9/445

(54) **Processing IC with embedded non volatile memory**

(71) Applicant: ST-Ericsson SA, 1228 Plan-les-Ouates (CH)
(72) Inventor: Grandin, Emmanuel, 72300 Parce-Sur-Sarthe (FR)
(74) Representative: Cabinet Plasseraud

(57) **Abstract**

There is disclosed an Integrated Circuit, IC, for use into a mobile device such as a cellular phone. The IC comprises a main processing unit (110) and a non-volatile memory hardware block (141) which may be programmed for permanently storing a start-up code executable by the main processing unit to allow the device to boot-up. Advantageously, the non-volatile memory is a non-volatile Random Access Memory, RAM, such as MRAM, a FeRAM, a PCRAM, or an ORAM. Thus, the start-up code may be modified or updated without complete redesign of the IC family.

## Description

### BACKGROUND OF THE INVENTION

### Technical Field

The present invention generally relates to a processing Integrated Circuit (IC) with embedded non volatile memory, for use into a mobile device.

It finds applications, in particular, in cellular phones and other mobile devices of that type, such as smart phones, MP3 players, etc.

In current processing ICs, such as baseband or application processor ICs used in mobile phones or other embedded products, there is a dedicated embedded memory area used to store in a permanent manner the start-up executable code to allow such ICs to boot-up. Usually, this executable code is the same for every IC in the same product family.

This dedicated embedded memory area can have different names, such as ROM (from the English "Read-Only Memory"), Boot ROM or On-Chip ROM, but always has the same role. Namely, it has as function to contain the very first instructions to be executed by the processing core of the IC, in order to allow subsequent operations, e.g. loading main software from permanent external memory into RAM (from the English "Random-Access Memory"), performing security checks, trying to connect to an external host, etc.

These instructions form the so-called "boot code", which is impossible to be modified due to the memory technology used to store it, i.e. Read Only Memory (ROM). As its name suggests, such a memory cannot be modified, and its content is fixed during the design phase of the IC. This non-modifiable aspect, combined with the fact that the "boot code" is mandatorily executed as the very first instructions, are very important in terms of security. Usually the "boot code" is put in the so-called Root-of-Trust position in the whole IC security strategy, i.e. the corner stone of the IC security. If there are some bugs to be corrected, or some unforeseen evolutions to be included into this boot code, then a new family of lCs has to be designed and produced, or at least a new version of the same IC has to be designed and produced. This is very costly, and it is also a limiting factor of the manufacturer's reactivity to the market needs.

### Related Art

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

The use of embedded programmable ROM such as an EEPROM (Electrically Erasable and Programmable Read-Only Memory) is of course possible. However, it is not really acceptable due to the high production costs associated with combining the EEPROM technology with other technologies for the manufacture of ICs.

One possible solution to overcome this problem may be to design the boot code contained in the Boot ROM so that it always checks for existence of possible "extensions", which could be contained into an external non-volatile memory such as a stand alone EEPROM or a flash memory IC. Such extensions could consist in software patches in case of errors contained into the original boot code, and/or when update of the boot code if necessary for adding some new features. Nevertheless, such an external non-volatile memory would thus be needed in any application wherein the boot code has to be modified, even if it is not required for other purposes. This has the drawback that it would add a significant cost to the system, especially in cases where the processing IC does not need its own external non-volatile memory for other purposes. Another drawback relates to security, because a part of the boot code would then be stored externally, and, thus, could be more easily corrupted than when it is entirely embedded into the IC. The cost drawback could be partly overcome by including the "extension" memory into the IC itself (to avoid having an additional memory component into the device) by using IC packaging options (such MultiChip Package, MCP) which are however more costly.

### SUMMARY OF THE INVENTION

The invention proposes to replace some hardware (HW) blocks contained into a processing IC of a mobile device (such as a baseband chip used in mobile phones) by other HW blocks based on non-volatile RAM such as MRAM (Magneto-resistive RAM) or FeRAM (Ferro-magnetic RAM), but performing the same roles while allowing to solve several other technical issues.

More precisely, there is proposed, according to a first aspect, an Integrated Circuit for use into a mobile device comprising:
- a main processing unit; and,
- a non-volatile memory hardware block which may be programmed for permanently storing a start-up code executable by the main processing unit to allow the device to boot-up.

Advantageously, the non volatile memory is a non-volatile Random Access Memory (RAM). A non-volatile RAM (NVRAM) has the ability to behave as a RAM, but can also retain its data in the absence of supply current. Because it behaves as a RAM, a NVRAM can be re-written in the case where the code stored therein has to be modified or updated.

That way, there is no need for producing another family of ICs to correct a boot code bug or make it evolve. This allows increased reactivity to correct boot code bugs or to include new features into it to address customers' requests. Another advantage comes from the fact that testing boot code can be done directly on the IC itself, without using expensive simulation means, such as an FPGA platform.

According to another advantage, there is no need to fetch "boot code patches" from an external non-volatile memory. Thus there is no additional cost for the production of dedicated ICs for which it is possible to change the "boot code".

For example, the non-volatile RAM comprises at least one of a Magneto-resistive RAM, MRAM, a Ferro-magnetic RAM, FeRAM, a Phase Change RAM, PCRAM, and an Organic RAM, ORAM, or any other RAM whose technology makes it also able to retain memory content without power supply.

In one embodiment of the present invention, the non-volatile memory hardware block comprises a first part for permanently storing the start-up code and a second part for being used as execution RAM during boot-up of the device. Advantageously, the split between both memory areas is not fixed by technology factors (unlike for separated Boot ROM and Boot RAM). Therefore, the respective sizes of said first part and/or of said second part are able to be changed. This adds flexibility for the customization of the IC. As well, the security permissions to access a memory area inside this non-volatile memory can also be adjusted, namely for one part independently of the other.

According to other embodiments, taken either alone or in combination:
- the integrated circuit comprises at least one second hardware block of non-volatile RAM which is so configured and/or controlled by software as to avoid any change of data stored therein, thereby featuring a One-Time Programmable (OTP) memory function. Accordingly, an OTP feature may be obtained inside the IC without incurring the cost of having memory area designed as standard OTP cells, which cost is very high;
- the integrated circuit comprises at least one further processing unit and at least one third hardware block of non-volatile RAM, said third hardware block of non-volatile RAM having a first part for permanently storing a code executable by said at least one further processing unit (for instance a Digital Processor, DSP) and a second part for being used as execution RAM during execution of said code by said at least one further processing unit. This allows to make it unnecessary having a ROM area inside the IC for storing the DSP code, thus simplifying the manufacture and reducing the cost of the IC. Compared to RAM-only DSPs, for which the execution code has to be fetched into their RAM at each boot, the one equipped with the non-volatile RAM only needs its execution code to be fetched when it needs to be changed;
- the integrated circuit comprises at least one fourth hardware block of non-volatile RAM, said fourth hardware block of non-volatile RAM being so controlled as to ensure encryption of data stored therein, thereby featuring a Secure Storage function. Advantageously, this Secure Storage function is thus provided inside the IC, which provides a higher level of protection against potential attacks compared to externally-stored Secure Storage, thereby enhancing confidentiality and integrity of the data;
- the fourth hardware block of non-volatile RAM is so controlled, further, as to ensure storage therein of parameters of the device like IMEI and SIMLock keys, thereby featuring a Parameters Storage function. Again, this is advantageous because the device parameters are stored inside the IC, which enhances security and avoids physical attacks on such critical parameters;
- the integrated circuit comprises at least one fifth hardware block of non-volatile RAM for permanently storing a monotonic counter. Such monotonic counter may be used for Digital Rights Management (DRM) purposes;
- the monotonic counter is controlled by the start-up code, which is built in a way to guarantee its monotonic behavior (e.g. this counter can only be increased, never decreased). This provides a nice way of managing DRM, which is also far less expensive and complicated than standard solutions based on OTP cells or some equivalent technologies such as fuses, ROM, etc.; and,
- the second, the third, the fourth and/or the fifth hardware block of non-volatile RAM are comprised in the same non-volatile RAM area as the first hardware block of non-volatile RAM. This eases the manufacturing process and adds further flexibility for the customization of the IC since the sizes of each block is able to be changed.

A second aspect of the present invention relates to method of configuring an Integrated Circuit, IC, for use into a mobile device. Said method may be implemented as part of the process of manufacturing the IC, and/or whenever reprogramming of the IC is needed during its lifetime. The method comprises programming a non-volatile memory hardware block of the IC which is a non-volatile Random Access Memory, RAM, with a start-up code permanently stored therein and executable by a main processing unit of the IC to allow the device to boot-up.

A third aspect of the present invention relates to a method of booting-up of a mobile device having an Integrated Circuit, IC. The method comprises a main processing unit of the IC executing a start-up code permanently stored in a non-volatile memory hardware block of the IC which is a non-volatile Random Access Memory, RAM.

Embodiments of the first aspect of the invention as broadly presented in the foregoing are also embodiments of the above second and third aspects.

In particular, the method of configuring the IC may further comprise programming of at least one further hardware block of non-volatile RAM, for permanently storing a code executable by at least one further processing unit.

In one embodiment, the further hardware block of non-volatile RAM has a first part for permanently storing the code executable by the further processing unit and a second part for being used as execution RAM during execution of said code by said further processing unit, and the respective sizes of said first part and/or of said second part of the third hardware block are able to be changed.

### BRIEF DESCRIPTION OF THE DRAWINGS

The present invention is illustrated by way of example, and not by way of limitation, in the figures of the accompanying drawings, in which:
- Figure 1 is a block diagram of an IC with embedded non volatile memory according to the prior art;
- Figure 2 is a schematic block diagram of an IC with embedded non volatile memory according to embodiments of the invention;
- Figure 3 is a flow chart illustrating steps of a method of manufacturing a mobile device embodying the present invention;
- Figure 4 is a flow chart illustrating steps of a method of starting a mobile device embodying the present invention; and,
- Figure 5 is a schematic view of an example of a mobile device comprising the IC embodying the solution proposed herein.

### DESCRIPTION OF PREFERRED EMBODIMENTS

The following is a description of aspects of the invention which shall be given in the context of a processing IC used in a mobile device. The mobile device which is considered in the embodiments provided herein is a cellular phone. Nevertheless, this is a non-limiting example only, since the invention similarly applies to other mobile devices, such as smart phones, MP3 players, personal digital assistants, etc. The invention might also be applied to non-mobile device having a processing IC, such as set-top boxes, digital photo frames, etc.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa. In the drawings, like reference numbers designate like parts in various Figures.

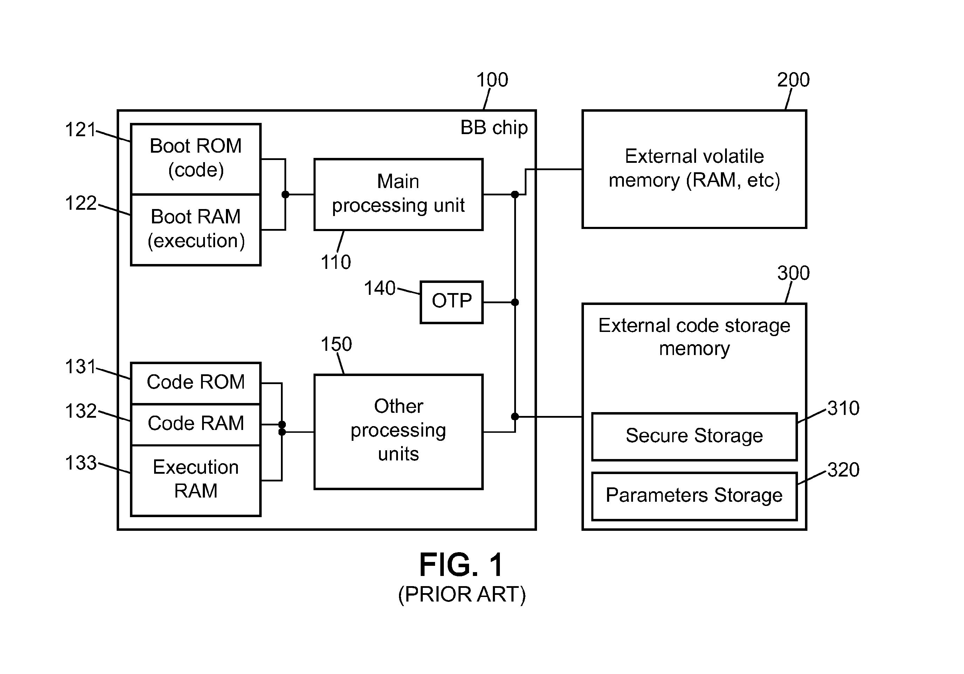

With reference to the block diagram of Figure 1, there shall first be described the general structure of a baseband processor of the cellular phone. Such a processing IC is also known as the "BB chip" in the jargon of the person skilled in the art. Only the main HW blocks, that is to say those which are concerned by implementation of the proposed solution, are being described in what follows. It goes without saying, however, that the BB chip is in practice more complex and so the electronic system used in the mobile device, of which the BB chip is only one of the components.

The baseband processor 100 comprises a main processing unit or core 110, which has access to a Boot ROM area 121 and to an associated Boot RAM area 122. The former is a non volatile memory which stores the start-up code of the BB chip in a permanent way, that is to say, even in the absence of power supply. The latter is a volatile memory that is used as a temporary data storage area for the start-up code of the Boot ROM 121 when the chip is powered on, when said start-up code is executed by the main processing unit 110. Stated otherwise, the main processing unit 110 is configured to control the start of the BB chip 100 upon application of the power supply voltage, by executing the start-up code located into the Boot ROM 121. The boot RAM 122 serves for storing any data that is processed by the BB chip 110 during said execution of the said start-up code.

The boot code contained into the Boot ROM may be critical for the behaviour of the considered IC. It may condition for example:
- on which HW interface the IC can connect on an external host (UART, USB, etc)
- which non-volatile external memory types are supported (NOR, NAND, eMMC, etc); and,
- what are the basic security procedures that have to be executed, so that the boot code can be considered as the so-called "Root-of-Trust" of the whole IC security means;
- etc.

The BB chip 100 also comprises other processing units generally designated by reference numeral 150, like for instance at least one Digital Signal Processor (DSP) configured for performing special tasks (e.g., processing video or audio data), dedicated controllers, etc. The other processing units 150 have access to further memory blocks, for instance a Code ROM 131, a Code RAM 132 and an Execution RAM 133. The Code ROM 131 permanently stores software resources that are needed for the DSPs to carry out, for instance, video and/or decoding and display. These software resources are commonly called the DSP Firmware (FW). The Code RAM 132 is loaded by the main processing unit 110 or by other processing units 150 with some so-called "Firmware plug-ins" (additional parts of executable code) whenever required for performing some particular processing. Such Firmware plug-ins can also be removed from the Code RAM 132, or replaced by other Firmware plug-ins, during the device lifecycle. The Code RAM 132 can be seen as a dynamic extension of Code ROM 131; the code stored into the Code ROM 131 has however to be particularly formed, so that it accepts to use dynamically-loaded code stored into the Code RAM 132 for some purpose. The Execution RAM 133 is used for storing data during the corresponding processing.

Finally, the BB chip 100 typically comprises a HW block of a special type, namely a One-Time Programmable (OTP) memory area 140. Such OTP memory is used for storing sensitive data, which may be unique to each chip and must therefore be integrity and/or confidentiality-protected. Due to its particular technology, OTP memory is very costly, and must be reduced as much as possible. When it comes to storage of keys or hashes, which are all at least 128 bits long, and can be up to 2048 bits long, the related cost is thus very high. In any case, the size of the OTP memory area 140 is fixed, i.e., cannot be changed unless the family of ICs is totally redesigned. This may prove burdensome for the designers of specific applications, or to address unforeseen features that might need OTP functionality. As it will become apparent from the description below, the proposed solution for an alternative non volatile memory, also makes it possible to address this issue nicely.

Usually, the BB chip 100 is not working alone, but, instead, communicates with an external volatile memory 200 and with an external code storage memory 300. The external volatile memory 200 can be any type of RAM. The RAM 200 is loaded with code and/or content data (e.g. a MP3 encoded file corresponding to a song) to be played, to be processed by one of the processing units 150. The external code storage memory 300 has also the ability to permanently store user data, such as contacts lists, pictures, music, etc. It may comprise a Flash memory, a hard drive, etc. It may have a Secure Storage area 310 for storing securely sensitive data such as security credentials, and a Parameters Storage area 320 for storing parameters set by the user or the manufacturer of the mobile device to configure the mobile device.

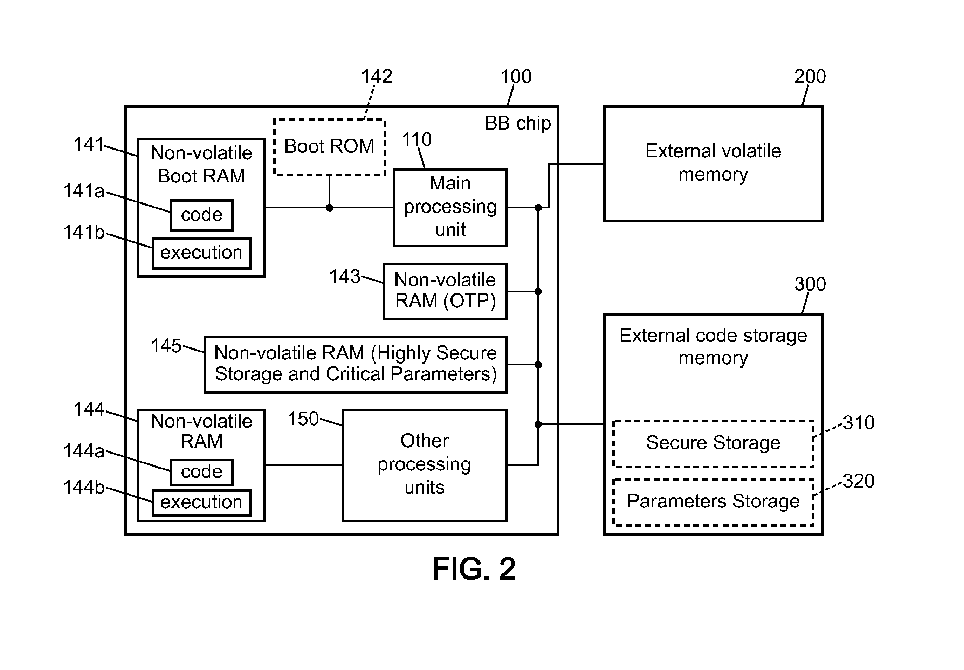

There shall now be described the solution proposed for allowing the start-up code conventionally stored in the Boot ROM 121 to be updated whenever necessary during the life of the product family. Reference shall be made to Figure 2.

The principle of the proposed solution is to replace the Boot ROM 121 and its usually associated Boot RAM 122 (Figure 1) by an embedded non-volatile RAM area 141 as depicted in Figure 2. This non-volatile RAM area 141 shall sometimes be referred to as the Boot NVRAM in what follows.

This non-volatile RAM may be an MRAM (magneto-resistive RAM), a FeRAM (ferro-magnetic RAM), a PCRAM (phase-change RAM), an ORAM (organic RAM), or similar. Some of these non-volatile RAMs, and especially MRAM, use the same IC production tools as the ones used to produce current ICs. Consequently, their integration into such ICs is comparable to the integration of an embedded ROM area.

A non-volatile RAM has the ability to behave as a RAM as regards writing. However, it can also retain its data in the absence of supply current, exactly like a non-volatile memory such as a ROM.

Being itself a RAM, a NVRAM can thus be modified after IC production (possibly under strict conditions managed by software, when security considerations have to be taken into account) in order to cope with bugs and unforeseen evolutions. Thus, this avoids the costly production of another family/version of ICs whenever updates are needed for the boot code stored therein.

Accordingly, there is no need for producing another family/version of ICs to correct a boot code bug or make it evolve. The proposed solution is also far more advantageous than an external non-volatile memory from which "boot code patches" would be fetched, as considered in the introduction of the present description.

Preferably, a portion of the non-volatile RAM can be used to store the start-up code ("boot code") and so forms the NVRAM itself, and another portion of it can be used as an associated execution RAM for storing the data that is processed by the main processing unit 110 during the execution of the start-up code. Advantageously, the split between both portions is not fixed (such as with separated Boot ROM and Boot RAM areas as depicted in Figure 1), which leaves more flexibility for the design of specific applications, and for their evolution over time.

As the boot code often manages starting procedures which encompass security aspects, some embodiments may provide a way to protect said code against tampering. For example, some dedicated non-volatile RAM cells can be used as detectors against any external magnetic field used to change/erase the boot NVRAM content.

In some embodiments, a little Boot ROM area 142 may still be present. Its aim is to allow establishing a connection with a Host over a simple-to-implement link (e.g. UART) in order to populate or replace the Boot NVRAM content, subject to security restrictions if any. If the Boot NVRAM is already populated, the Boot ROM code stored in the Boot ROM 142 only jumps into it. Because Boot ROM 142 is optional, it appears in dotted lines in Figure 2 of the drawings.

When no such Boot ROM is present, the Boot NVRAM may be populated the first time via a JTAG interface, for instance. In one example this may be carried out during IC testing (during IC production), or later. For further updates, the code of the Boot NVRAM can itself be used to establish a connection with a Host, subject to security restrictions if any.

Then, at each boot, the content of the Boot NVRAM (code and execution RAM) is used to load the External code storage memory 300 content into the External volatile memory 200 and execute it. Security checks might be performed at this stage, and this loading can be done in several steps, but this is beyond the scope of the present description.

Other non-volatile RAM area could also be used, in conjunction or not with the area 141 used for storing the boot code, to perform other roles. In what follows, examples of possible extensions of the principle of the proposed solution shall be described, still in consideration of the block diagram of Figure 2. Even if these examples are illustrated by additional NVRAM HW blocks which are separate, it goes without saying that they all can be implemented as respective blocks of one and the same NVRAM area (for instance a macro-block of NVRAM).

In a first example, such a further non-volatile RAM area 143 is aimed at replacing at least part of the OTP (One-Time-Programmable) HW block 140 of Figure 1. Indeed, a portion of the non-volatile RAM may be controlled to prevent any content changes, thus providing a feature which is equivalent to an OTP function (i.e., write-protection of used bits). Such OTP function can thus be achieved either by the Boot NVRAM code (including cryptographic protection against changes), or by HW means (e.g., the value of the NVRAM cell prevents itself that it can be written again, for example by having different NVRAM cells with some opposite or equal spin values to detect a global magnetic field realignment along with keeping the OTP bit value) This embodiment allows having bigger OTP areas, which otherwise would be quite expensive if conventional memory cells of the OTP type (fuses, etc) was to be used.

In a second example, a further non-volatile RAM area 144 is aimed at replacing at least part of the DSP ROM and RAM areas, for more flexibility. In this example, non-volatile RAM further serves to store some code corresponding to the DSP firmware, and also as execution memory for at least some of the other processing units 150 (DSP, controllers, etc). This non-volatile RAM 144 may thus be used to replace the so-called firmware ROM 131 and its associated RAM 132,133 of Figure 1. It has to be populated once, e.g., during the first Boot phase or during the IC testing phase (like for Boot NVRAM), but does not need to be populated at each boot if no update is needed, due to its non volatile character.

In a third example, a further non-volatile RAM area 145 is aimed at ensuring at least part of the so-called Secure Storage, which otherwise is usually an encrypted memory area on an external non-volatile memory, to store security credentials, such as certificates, keys, and so on. Indeed, Secure Storage can be achieved by the same means as the ones used when using external non-volatile memory like memory 310 of Figure 1 (e.g. encryption, etc). Because this NVRAM is inside the BB chip 100 itself, where the amount of such NVRAM might be limited, it should preferably be reserved to really critical elements, e.g. root key, DRM keys, SSL credentials, IMEI, SIMLock keys, etc. Therefore, it might be convenient to keep at least some Secure Storage capability outside the BB chip 100. For that reason, Secure Storage 310 is still depicted in Figure 2, yet in dotted lines to reflect its character of optional feature.

Alternatively or additionally, the non-volatile RAM area 145 may also be used for replacing parameters storage into the external non-volatile memory 300 (an additional non-volatile RAM area, different from the non-volatile RAM area 145, can also be used). This saves some space (especially for NOR flash technology where a huge amount of NOR flash is used for only very few parameters stored, due to flash wear prevention) and increases storage security (especially for parameters like IMEI, SIMLock keys, etc) because the parameters are thus stored within the BB chip 100 itself. Advantageously, there is an obvious hard binding between the BB chip 100 and its associated parameters, because they are stored within said chip. The same remark as regards keeping some Secure Storage 310 in the external memory 300 also applies here as regards parameters storage 320.

Still further non-volatile RAM areas may be used for still different purposes, such as implementing a monotonic counter, controlled or not by the boot code, which can be used for example for DRM protection purposes.

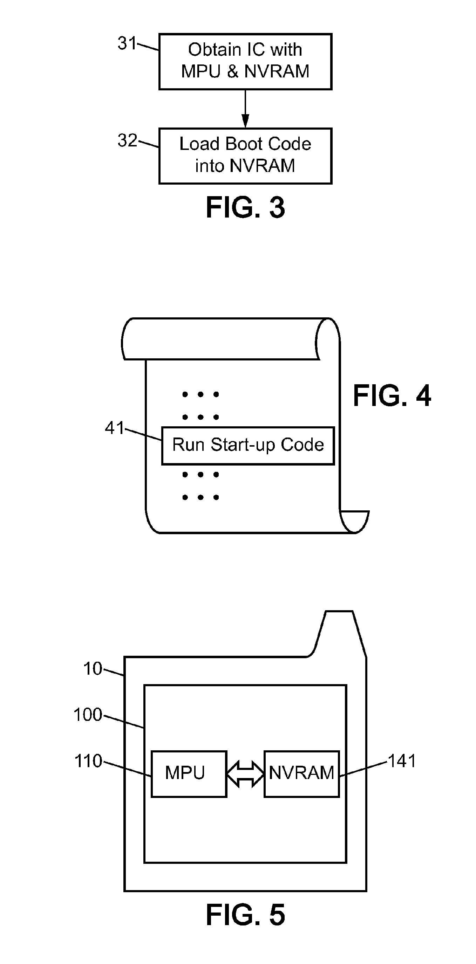

With reference to Figure 3, a method of manufacturing an IC of the type that has been described above comprises a step 31 of obtaining an IC with a main processing unit and non-volatile memory hardware block which is a non-volatile RAM. It further comprises a step 32 of programming this NVRAM with a start-up code, which shall then be permanently stored therein, and which is executable by main processing unit of the IC to allow the device to boot-up.

Referring to Figure 4, a method of booting-up a mobile device having an IC, comprises a step 41 of having the main processing unit of the IC execute a start-up code permanently stored in a non-volatile memory hardware block of the IC which is a non-volatile RAM.

Steps 31, 32 and 41 of the above methods can be embedded in a computer program product, which comprises all the features enabling the implementation of the method of manufacturing an IC and of a method of booting-up the mobile device, respectively, and which - when loaded in an information processing system - is able to carry out these methods. Computer program means or computer program in the present context mean any expression, in any language, code or notation, of a set of instructions intended to cause a system having an information processing capability to perform a particular function either directly or after conversion to another language. Such a computer program can be stored on a computer or machine readable medium allowing data, instructions, messages or message packets, and other machine readable information to be read from the medium. The computer or machine readable medium may include non-volatile memory, such as ROM, Flash memory, Disk drive memory, CD-ROM, and other permanent storage. Additionally, a computer or machine readable medium may include, for example, volatile storage such as RAM, buffers, cache memory, and network circuits. Furthermore, the computer or machine readable medium may comprise computer or machine readable information in a transitory state medium such as a network link and/or a network interface, including a wired network or a wireless network, that allow a device to read such computer or machine readable information.

Turning now to Figure 5, there is shown diagrammatically a mobile device 10 comprising an integrated circuit 100 as diagrammatically illustrated in Figure 2 and detailed hereinabove. The integrated circuit 100 comprises, in particular, the processing core 110 which is labelled with the acronym MPU (standing for Main Processing Unit) and the embedded NVRAM 141. There might be several other processing cores within the integrated circuit 100, either with their own embedded NVRAM each, or with some shared common NVRAM.

From the foregoing it will be appreciated by those skilled in the art that, although specific embodiments have been illustrated and described herein for purposes of illustration, various modifications may be made, and equivalents may be substituted, without deviating from the scope of the invention.

Additionally, many modifications may be made to adapt a particular situation to the teachings of the present description without departing from the central inventive concept described herein. Furthermore, an embodiment may not include all of the features described above. Therefore, it is intended that the present description be not limited to the particular embodiments disclosed, but that the invention include all embodiments falling within the scope of the appended claims.

It is stipulated that the reference signs in the claims do not limit the scope of the claims, but are merely inserted to enhance the legibility of the claims.

## Claims

1. Integrated circuit for use into a mobile device comprising:
- a main processing unit (110); and,
- a non-volatile memory hardware block (141) which may be programmed for permanently storing a start-up code executable by the main processing unit to allow the device to boot-up,
**characterized in that** the non-volatile memory hardware block is a first hardware block of non-volatile Random Access Memory, RAM.

2. Integrated circuit according to claim 1 wherein the non-volatile RAM comprises at least one of a Magneto-resistive RAM, MRAM, a Ferro-magnetic RAM, FeRAM, a Phase Change RAM, PCRAM, and an Organic RAM, ORAM.

3. Integrated circuit according to claim 1 or 2, wherein the non-volatile memory hardware block comprises a first part (141 a) for permanently storing the start-up code and a second part (141 b) for being used as execution RAM during boot-up of the device, and wherein the respective sizes of said first part and/or of said second part are able to be changed.

4. Integrated circuit according to anyone of claims 1 through 3, further comprising at least one second hardware block (143) of non-volatile RAM which is so configured and/or controlled by software as to avoid any change of data stored therein, thereby featuring a One-Time Programmable memory function.

5. Integrated circuit according to anyone of the preceding claims, further comprising at least one further processing unit (150) and at least one third hardware block (144) of non-volatile RAM, for permanently storing a code executable by said at least one further processing unit.

6. Integrated circuit according to claim 5, wherein the third hardware block (144) of non-volatile RAM has a first part (144a) for permanently storing the code executable by the at least one further processing unit and a second part (144b) for being used as execution RAM during execution of said code by said at least one further processing unit, and wherein the respective sizes of said first part and/or of said second part of the third hardware block are able to be changed.

7. Integrated circuit according to anyone of the preceding claims, further comprising at least one fourth hardware block (145) of non-volatile RAM, said fourth hardware block (145) of non-volatile RAM being so controlled as to :
- ensure encryption of data stored therein, thereby featuring a Secure Storage function; and/or,
- to ensure storage therein of parameters of the device like IMEI and SIMLock keys, thereby featuring a Parameters Storage function.

8. Integrated circuit according to anyone of the preceding claims, further comprising at least one fifth hardware block of non-volatile RAM for permanently storing a monotonic counter controlled by the start-up code.

9. Integrated circuit according to any one of claims 4 through 8, wherein the second, the third, the fourth and/or the fifth hardware blocks of non-volatile RAM are comprised in the same non-volatile RAM area as the first hardware block of non-volatile RAM.

10. Method of configuring an Integrated Circuit, IC, for use into a mobile device, **characterized in that** it comprises programming a non-volatile memory hardware block of the IC which is a non-volatile Random Access Memory, RAM, with a start-up code permanently stored therein and executable by a main processing unit of the IC to allow the device to boot-up.

11. Method according to claim 10, wherein the non-volatile memory hardware block comprises a first part (141 a) for permanently storing the start-up code and a second part (141b) for being used as execution RAM during boot-up of the device, and wherein the respective sizes of said first part and/or of said second part are able to be changed.

12. Method of claim 11, further comprising programming of at least one further hardware block (144) of non-volatile RAM, for permanently storing a code executable by at least one further processing unit(150).

13. Method according to claim 12, wherein the further hardware block (144) of non-volatile RAM has a first part (144a) for permanently storing the code executable by the further processing unit and a second part (144b) for being used as execution RAM during execution of said code by said further processing unit, and wherein the respective sizes of said first part and/or of said second part of the third hardware block are able to be changed.

14. Method of booting-up of a mobile device having an Integrated Circuit, IC, comprising a main processing unit of the IC executing a start-up code permanently stored in a non-volatile memory hardware block of the IC which is a non-volatile Random Access Memory, RAM.

15. Method according to claim 14, wherein the non-volatile memory hardware block comprises a first part (141 a) permanently storing the start-up code and a second part (141b) used as execution RAM during boot-up of the device, and wherein the respective sizes of said first part and/or of said second part are able to be changed.
